# EUROPEAN PATENT APPLICATION

(11) **EP 2 228 266 A1**
(43) Date of publication of application: **15.09.2010**
(21) Application number: 10250450.3
(22) Date of filing: 11.03.2010
(51) Int. Cl.: B60R 19/34, B62D 21/15, F16F 7/12

(54) **Vehicle structures**

(30) Priority: 13.03.2009 GB 0904343
(71) Applicant: Linde AG, 80331 München (DE)
(72) Inventor: Stratton, Paul Francis, Bingley, West Yorkshire BD16 4SD (GB)
(74) Representative: Wickham, Michael

(57) **Abstract**

An energy-absorbing structure (10) for a vehicle comprises an energy-absorbing member (1) that folds or crumples on crash impact, the energy-absorbing member (1) being of a functionally-graded material having a less ductile core (12) integral with a more ductile shell (14). The core is preferably of a medium carbon steel or an HSLA steel, with the shell having a lower content of carbon. The energy absorbing member may be made by partial decarburisation of a medium carbon or an HSLA steel member.

## Description

This invention relates to an energy absorbing structure for a vehicle, particularly a motor vehicle (automobile).

Energy absorbing structures are employed at the front and rear of modern motor vehicles, particularly passenger cars, so as better to absorb the energy of a crash and thus protect the driver and any passengers. The structures are designed such that the material of which they are formed becomes folded in a crash, thereby absorbing energy.

An example of such an energy absorbing structure is given in US-A-5 224 574. The performance of such an energy absorbing structure in a crash is dependent on the mechanical properties of the material, usually steel, from which it is formed.

According to the present invention there is provided an energy-absorbing structure for a vehicle comprising an energy-absorbing member that folds or crumples on crash impact, **characterised in that** the energy-absorbing member is of a functionally-graded material having a less ductile core integral with a more ductile shell.

Preferably, the functionally-graded material is a steel.

Preferably the core of a steel energy-absorbing member has a first average percentage carbon content by weight and the shell of the member has a second average percentage carbon content by weight, the first average percentage carbon context by weight being greater than the second average percentage carbon content by weight. The core is typically hard and the shell ductile.

Preferably, the core of the energy absorbing material has an average carbon content of 0.2 - 0.59% by weight.

The core of the energy absorbing material is of a medium carbon steel. Such a medium carbon steel typically has an average carbon content in the range of 0.30 - 0.59% by weight. The medium carbon steel may additionally contain one or more of manganese, silicon and copper provided that the manganese content does not exceed 1.65% by weight, the silicon content does not exceed 0.60% by weight, and the copper content does not exceed 0.60% by weight. The medium carbon steel is generally free of or does not require the presence of any chromium, cobalt, niobium, molybdenum, nickel, titanium, tungsten, vanadium and zirconium.

The core of the energy absorbing medium may alternatively be of an HSLA (High Strength Low Alloy) Steel. Such a steel typically has a carbon content of 0.05 - 0.25% to retain formability and weldability. Other alloying elements include up to 2% by weight manganese and small quantities of copper, nickel, niobium, nitrogen, vanadium, chromium, molybdenum, titanium, calcium, rare earth elements or zirconium.

Typically the shell is of the same steel as the core, but is in partially decarburised state. The shell preferably has an average percentage carbon content of 0.001 % by weight to 0.15% by weight.

The present invention also provides a method of making an energy-absorbing structure including the step of subjecting an energy-absorbing member of a carbon steel having a core integral with a shell to a controlled decarburising atmosphere for a period of time sufficient to reduce the average percentage carbon content of the shell but not the core of the member so as to render the core less ductile than the shell.

The carbon steel may be of a medium carbon steel or an HSLA steel. Such steels are quite brittle in undecarburised state. The carbon steel preferably contains from 0.20 to 0.59% by weight of carbon. The carbon content of the shell at the end of decarburisation is preferably in the range of 0.001 to 0.15% by weight.

The controlled decarburising atmosphere is preferably based on nitrogen, a mixture of nitrogen and hydrogen or a mixture of nitrogen, carbon monoxide and hydrogen. The decarburising agent is preferably water vapour. It may alternatively or additionally be carbon dioxide.

In one example of a method according to the invention the control of the decarburising atmosphere is preferably executed by controlling the ratio by volume of hydrogen to water vapour therein. For example, the ratio may be maintained in the range 10:1 to 2:1. In such an example, the decarburising atmosphere may comprise from 4 to 10% by volume of hydrogen, 0.4 to 5% by volume of water vapour, balance nitrogen.

The decarburising temperature is typically in the range 750 to 950°C.

The energy-absorbing member is preferably subjected to decarburisation for up to 15 minutes, typically for 5 to 10 minutes. The resulting member has a pronounced shell.

The energy absorbing structure according to the invention may comprise a front bumper or rear bumper of a motor vehicle.

Energy absorbing structures according to the invention offer effective energy absorption in a crash with substantial resistance to fracture of the energy absorbing member. If the energy absorption member were of a uniform composition throughout, it would stand either to offer less energy absorption or a greater risk of fracture according to whether the member was, respectively, more or less ductile.

Structure and methods according to the present invention will now be described by way of example with reference to the accompanying drawings, in which:
Figure 1 is a sectional side view of an energy absorbing member for use in an energy absorbing structure according to the invention.
Figure 2 is a sectional side view of the absorber shown in Figure 1 in a state plastically deformed by compression;
Figure 3 is a view of an energy-absorbing structure including the member shown in Figure 1.
Figure 4 is a detail of the structure shown in Figure 1.

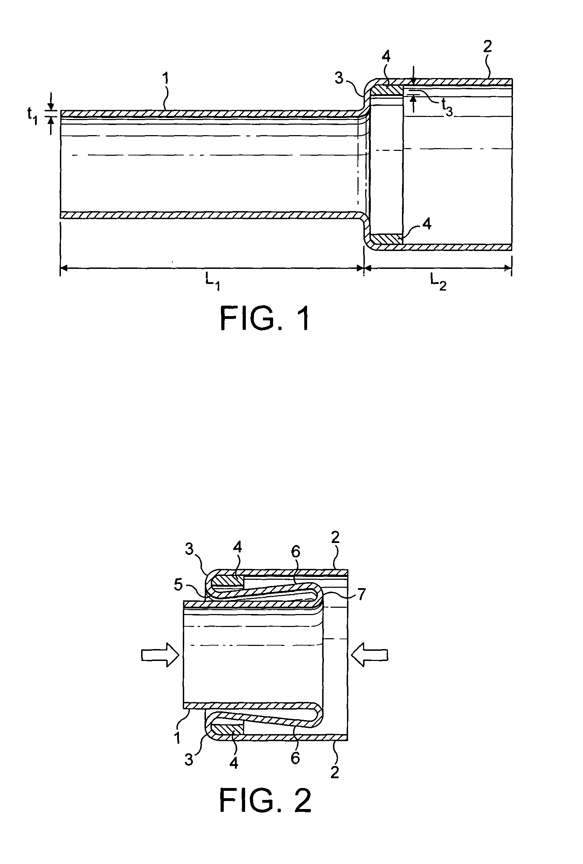

Referring specifically to Figures 1 and 2, the embodiment consists of a tubular small-diameter portion 1 and a large-diameter portion 2 on the extension from the small-diameter portion 1, formed continuously with a stepped portion 3 provided in between. Usually the small-diameter portion 1 and large-diameter portion 2 which sandwich the stepped portion 3 therebetween are formed all together in one piece with a suitable rounded corner as shown. The configuration of such tubular bodies is such that it permits tube materials to be easily expanded and formed as by hydraulic forming. In the stepped portion 3 there are fitted along the inner wall of the large-diameter portion 2 a reinforcing ring 4 which is formed by of a strip of mild steel or the like coiled to an annular shape either with a short gap between the cut ends or with no such gap to an endless fashion. In position where it is abutted to the stepped portion 3, the reinforcing ring 4 is secured to the inner wall surface of the large-diameter portion 2 as by spot welding. Of the outer periphery of the reinforcing ring 4, the portion facing the corner of the stepped portion 3 is bevelled to ensure a close contact with the latter as shown in Figure 1. The wall thickness t₃ of the reinforcing ring 4 is substantially equal to or somewhat greater than the waii thickness t₁ of the small-diameter portion 1, and the width of the reinforcing portion 1 usually has a length L₁ about twice the length L₂, of the large-diameter portion 2.

When the energy-absorbing structure according to the present invention is compressed with a pressure P exerted from both ends, the body tends to yield and the small-diameter portion 1 is plastically forced into the large-diameter portion 2. At this time the latter remains undeformed because it is reinforced with the reinforcing ring 4 at the portion contiguous to the stepped portion 3. The portion of the small-diameter portion 1 adjacent the stepped portion 3 is guided by the end face of the reinforcing ring 4 and led thereinto, thus naturally forming a first fold 5, an intermediate-diameter portion 6. and a second fold 7, as shown in Figure 2. As the compression is kept on, the first fold 5 remains as it is but the second fold 7, by contrast, is displaced with the advance of the small-diameter portion 1 into the large-diameter portion 2, until the small-diameter portion 1 is turned back along the second fold 7 with inside out, thus forming the intermediate-diameter portion 6. In inverse proportion to the decrease in the length of the small-diameter portion 1, the intermediate-diameter portion 6 gains length under the small-diameter portion 1 passes through the second fold 7. With further plastic deformation a resisting force is produced. This deformation is continuously carried out and, because the resisting force remains constant during this period, the load required for the compression is substantially constant. Throughout this the large-diameter portion 2 retains the original shape.

Assuming that the small-diameter portion 1 has entered completely into the large-diameter portion 2, the length of the intermediate-diameter portion 6 is one-half of the original length L₁ of the small-diameter portion 1, and if it is just accommodated in the large-diameter portion 2 has only to be about one-half of L₁. In other words, the overall length before compression (L₁ + L₂) is reduced by the total of compression to L₂, or about one-third of the original length.

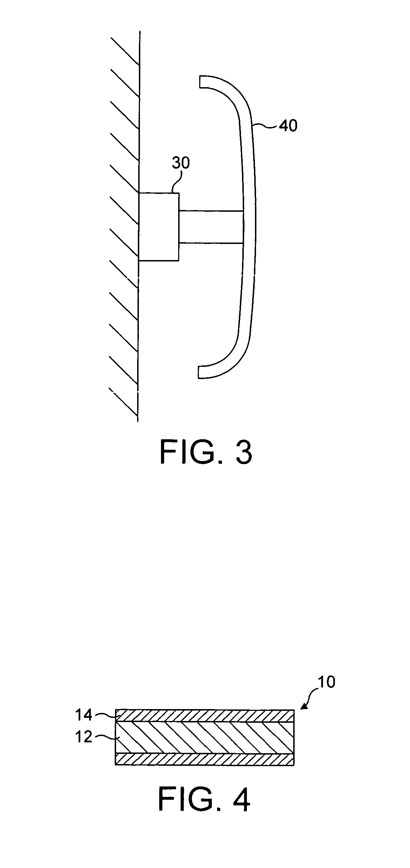

The small diameter portion 1 of the tubular body is formed of a functionally-graded steel material. With reference to Figure 4, the steel body 10 comprises an inner medium carbon core 12 and outer low carbon shell 14. The shell 14 is more ductile than the core 12. On impact the hard higher carbon core 12 absorbs the energy whereas the soft low carbon shell or outer layer 14 is ductile and resists crack formation.

Typically the core 12 is a medium carbon steel having an average carbon content in the range of 3% to 0.59% by weight. Typically the shell 14 is a low carbon steel having an average carbon content in the range 0.05% to 0.15% by weight. The steel body 10 is preferably formed by controlled decarburisation of a uniform medium carbon steel member.

A typical experimental procedure for performing the decarburisation is to place the tubular body of medium carbon steel in a sealed quench or other suitable furnace in which a controlled decarburising atmosphere at a suitable elevated temperature has been established. This is done by passing dry nitrogen into the furnace at a suitable rate, e.g. 2.8 m³/hr, the nitrogen being moisturised with water at a rate of, say, 0.21 litres per hour. Hydrogen is admitted to the furnace separately from the nitrogen at a rate sufficient to give a ratio by volume of hydrogen to water vapour in the resultant atmosphere in the range of 2:1 to 10:1. When the temperature of the atmosphere has reached a chosen value in the range 750° to 950°C the tubular steel body is loaded into the furnace. It is held at the chosen temperature and chosen ratio by volume of hydrogen to water vapour for a period of from 5 to 15 minutes in order to reduce the average carbon content in the outer layer of the steel body to a value in the range 0.05 to 0.15%. The requisite period of time can be determined by simple experiment. Once the tubular body has been subjected to the controlled decarburising atmosphere for the requisite period of time, it is removed from the furnace.

Referring now to Figure 3, two tubular members 30 (of which only one is shown) of functionally graded steel can be used to support a bumper 40.

## Claims

1. An energy-absorbing structure for a vehicle comprising an energy-absorbing member that folds or crumples on crash impact, **characterised in that** the energy-absorbing member is of a functionally-graded material having a less ductile core integral with a more ductile shell.

2. A structure according to claim 1, wherein the functionally-graded material is a steel.

3. A structure according to claim 2, wherein the core has a first average percentage carbon content by weight and the shell has a second average percentage carbon content by weight, the first average percentage carbon content by weight being greater than the second average percentage carbon content by weight.

4. A structure according to claim 2 or claim 3, wherein the core has an average percentage carbon content of 0.20% by weight to 0.59% by weight.

5. A structure according to claim 4, wherein the core is of a medium carbon steel or an HSLA steel.

6. A structure according to any one of the preceding claims, wherein the core is hard and the shell is ductile.

7. A structure according to any one of claims 4 to 6, wherein the shell is of the same steel as the core, but is in a partially decarburised state.

8. A structure according to claim 7, wherein the shell has an average percentage carbon content of 0.001 % by weight to 0.15% by weight.

9. A structure according to any one of the preceding claims, wherein the structure is a support for the bumper of a vehicle.

10. A motor vehicle incorporating an energy-absorbing structure according to any one of the preceding claims.

11. A method of making an energy-absorbing structure according to any one of claims 1 to 9, including the step of subjecting an energy-absorbing member of carbon steel having a core integral with a shell to a controlled decarburising atmosphere for a period of time sufficient to reduce the average percentage carbon content of the shall but not the core of the member so as to render the core less ductile than the shell.

12. A method according to claim 11, wherein the carbon steel contains carbon in the range of 0.20% to 0.59% by weight.

13. A method according to claim 11 or 12, wherein the carbon steel is a medium carbon steel or an HLSA steel.

14. A method according to any one of claims 11 to 13, wherein the controlled decarburising atmosphere is based on nitrogen, a mixture of nitrogen and hydrogen, or a mixture of nitrogen, carbon monoxide and hydrogen, the atmosphere also containing a decarburising agent selected from water vapour, carbon dioxide, and mixtures of water vapour and carbon dioxide, and decarburisation is performed at at temperature in the range 750°C to 950°C.

15. A method according to claim14, wherein the decarburising atmosphere has a ratio by volume of hydrogen to water vapour in the range 10:1 to 2:1.
